# EUROPÄISCHE PATENTSCHRIFT

(11) **EP 1 605 751 B1**
(45) Veröffentlichungstag und Bekanntmachung des Hinweises auf die Patenterteilung: **23.09.2009**
(21) Anmeldenummer: 04720874.9
(22) Anmeldetag: 16.03.2004
(51) Int. Cl.: A01N 37/42, A01N 49/00, A01N 43/16

(54) **VERWENDUNG VON ACYLCYCLOHEXANDION-DERIVATEN ZUR VERBESSERUNG DER FROSTTOLERANZ BEI KERN-, STEINOBST UND ZITRUSPFLANZEN**
USE OF ACYLCYCLOHEXANEDIONE DERIVATIVES FOR IMPROVING THE FROST TOLERANCE IN PLANTS OF STONE FRUIT, OF POMACEOUS FRUIT AND CITRUS PLANTS
USAGE DE DERIVES D'ACYLCYCLO-HEXANEDIONE POUR AMELIORER LA TOLERANCE AU GEL DES PLANTES DE FRUITS A NOYAU, DE FRUITS A PEPINS ET D'AGRUMES

(30) Priorität: 17.03.2003 DE 10311689
(43) Veröffentlichungstag der Anmeldung: 21.12.2005
(73) Patentinhaber: BASF SE, 67056 Ludwigshafen (DE)
(72) Erfinder: RADEMACHER, Wilhelm, 67117 Limburgerhof (DE); KOBER, Reiner, 67136 Fussgönheim (DE); SCHMITZ-EIBERGER, Michaela, 53332 Bornheim (DE); NOGA, Georg, 53359 Rheinbach (DE)
(74) Vertreter: Reitstötter - Kinzebach
(86) Internationale Anmeldenummer: PCT/EP2004/002713
(87) Internationale Veröffentlichungsnummer: WO 2004/082379

(56) Entgegenhaltungen:
- EP-A- 0 123 001
- EP-A- 0 348 767
- DE-A- 4 437 945
- FAGERNESS MATTHEW J ET AL: "Temperature and trinexapac-ethyl effects on bermudagrass growth, dormancy, and freezing tolerance" CROP SCIENCE, Bd. 42, Nr. 3, Mai 2002 (2002-05) - Juni 2002 (2002-06), Seiten 853-858, XP002279987 ISSN: 0011-183X
- KURTZ E: "Specific crop management helps rape better during the winter. (Mit gezielter Bestandesfuehrung Raps gut ueber den Winter helpen)" PFLANZENARZT (53, NO. 8, 7-9, 2000) 2 FIG. 1 TAB. CODEN: PFLZAQ, Bd. 53, Nr. 8, 2000, Seite 9 XP001181363
- ROBERTSON A J ET AL: "The role of plant growth regulators on the freezing tolerance of winter annual cereals and cell suspension cultures" ADVANCES IN PLANT COLD HARDINESS, 1993, Seiten 253-271, XP009030879 4th International Plant Cold Hardiness Seminar;Uppsala, Sweden; July 1-5, 1991, CRC Press, Inc., Boca Raton, Florida, USA;CRC Press, London, England, UK ISBN: 0-8493-4950-8
- COSTA ET AL.: HORTSCIENCE, Bd. 36, Nr. 5, 2001, Seiten 931-933,

## Beschreibung

Die vorliegende Erfindung betrifft die Verwendung von Acylcyclohexandion-Derivaten zur Verbesserung der Toleranz von Pflanzen gegenüber Frost.

Die Temperatur ist einer der Hauptfaktoren, die das Wachstum und Gedeihen von Pflanzen beeinflussen. Kälte (Temperaturen bis zu 0 °C) und Frost (Temperaturen unter 0 °C) können das Keimen und Wachsen von Pflanzen verlangsamen und haben einen wesentlichen Einfluss auf ihre Entwicklung sowie auf die Quantität und Qualität ihrer Produkte. Kulturpflanzen, wie Mais, Zuckerrübe, Reis, Soja, Kartoffel, Tomate, Paprika, Melone, Gurke, Bohne, Erbse, Banane und Zitrusarten, werden bereits bei Temperaturen unter 5 °C geschädigt bzw. deutlich in ihrer Entwicklung zurückgeworfen. Temperaturen geringfügig unter 0 °C führen bei diesen Pflanzenarten bereits zu einem teilweise oder vollständigen Absterben. Spätfröste um die Blütezeit führen beispielsweise bei Kern- und Steinobstarten, wie Apfel, Birne, Quitte, Pfirsich, Nektarine, Aprikose, Pflaume, Zwetschge, Mandel oder Kirsche, immer wieder zu erheblichen Ertragsausfällen. Kälte- oder frostgeschädigte Pflanzen weisen Absterbeerscheinungen z.B. an Blättern, Blüten und Knospen auf. Frostgeschädigte Blüten entwickeln, wenn überhaupt, deformierte oder mit Schalenfehlern behaftete Früchte, die nicht oder nur schwer vermarktet werden können. Schwerwiegende Kälte- und Frostschäden gehen mit dem Absterben der gesamten Pflanze einher.

Kälte- und Frostschäden sind daher ein großer Verlustfaktor für den Agrarbereich. Die bisherigen Möglichkeiten zur Vermeidung von Kälte- und Frostschäden sind wegen ihrer hohen Aufwendungen oder wegen ihrer häufig nicht reproduzierbaren Resultate eher unbefriedigend. Zu nennen sind hier die Züchtung von kälte- und frostresistenten Pflanzensorten, das Vorziehen kälteempfindlicher Pflanzen im Gewächshaus, die anschließend zu einem möglichst späten Zeitpunkt ins Freiland ausgesetzt werden, Kultivation unter Folie, Luftumwälzung im Bestand, Einblasen von Warmluft, Aufstellen von Öfen im Bestand und Frostschutzberegnung.

Die DE 4437945 beschreibt Vitamin E enthaltende Pflanzenstärkungsmittel, die die pflanzenschädigende Wirkung von phytotoxischen Agrochemikalien und anderer abiotischer Stressoren verringern sollen. Diese Mittel können außerdem Frostschutzmittel, wie Glycerin, enthalten. Eine Kälte- oder Frostschäden verhindernde Wirkung des gegebenenfalls enthaltenen Frostschutzmittels wird nicht beschrieben.

J. Lalk und K. Dörffling beschreibe in Physiol. Plant. 63, 287-292 (1985), dass Abscisinsäure die Frostresistenz gegen Kälte in abgehärtetem Winterweizen verbessern kann.

Die EP-A 123 001 beschreibt die Verwendung von Acylcyclohexandionverbindungen der allgemeinen Formel 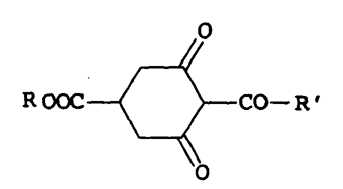 worin
R für Wasserstoff, Alkyl, Alkylthioalkyl oder gegebenenfalls substituiertes Phenyl steht und
R' für Alkyl, gegebenenfalls substituiertes Benzyl, Phenethyl, Phenoxymethyl, 2-Thienylmethyl, Alkoxymethyl oder Alkylthiomethyl steht,
oder Salzen davon als Wachstumsregulatoren. Außerdem sollen diese Verbindungen angeblich neben einer Reihe anderer vorteilhafter Wirkungen die Kälteresistenz von Reissetzlingen verbessern. Eine Verbesserung der Kälteresistenz wird jedoch an keiner Stelle belegt. Auch geht aus dieser Schrift nicht hervor, in welchem Temperaturbereich die Kälteresistenz-verbessernde Wirkung auftreten soll.

G. Costa et al. beschreiben in Hortscience (3615), 2001, 931-933 die Verwendung von Prohexadion-Ca zur Wachtumsregulatoren und Verringerung des Auftretens von Feuerbrand bei Birne.

Aufgabe der vorliegenden Erfindung war es, ein Mittel bereitzustellen, mit welchem die Toleranz von Pflanzen gegenüber Frost verbessert werden kann.

Die Aufgabe wurde gelöst durch die Verwendung von Verbindungen der Formel I 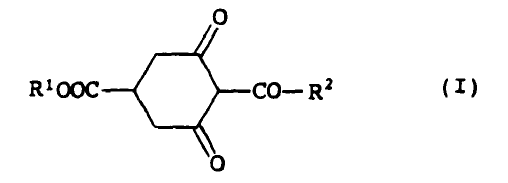 worin
- R¹: für H oder C₁-C₁₀-Alkyl steht und
- R²: für C₁-C₁₀-Alkyl oder C₃-C₁₀-Cycloalkyl steht,
oder Salzen davon zur Verringerung oder Verhinderung von Frostschäden bei Kern- und Steinobst sowie bei Zitruspflanzen durch Temperaturen im Bereich von -15 bis 0 °C, wobei man die Verbindungen der Formel I oder Salze davon auf diese Pflanzen oder Pflanzenteile davon appliziert.

Bei frostempfindlichen Pflanzen - das sind beispielsweise Kern- und Steinobstarten in der Blühphase sowie Zitrusarten, die zwar kälte-, jedoch nicht frostresistent sind - eignen sich die Verbindungen der Formel I zur Verbesserung der Toleranz der Pflanzen gegenüber Temperaturen im Bereich von -15 °C bis 0 °C, besonders bevorzugt von -10 °C bis 0 °C, und insbesondere von -5 °C bis 0 °C.

Unter Toleranz versteht man insbesondere die Verringerung oder Verhinderung von Kälte- und/oder Frostschäden bei Pflanzen.

Erfindungemäß werden die Verbindungen der Formel I zur Verringerung oder Verhinderung von Frostschäden bei Kern- und Steinobst sowie bei allen Zitrusarten verwendet. Bei den Kern- und Steinobstarten werden diese Verbindungen besonders bevorzugt zur Verhinderung von Frostschäden an den Knospen, Blüten, Blättern und jungen Früchten dieser Pflanzen verwendet. Bei den Kern- und Steinobstarten handelt es sich beispielsweise um Apfel, Birne, Quitte, Pfirsich, Aprikose, Nektarine, Kirsche, Pflaume, Zwetschge oder Mandel und vorzugsweise um Apfel. Bei den Zitrusarten handelt es sich beispielsweise um Zitrone, Orange, Grapefruit, Clementine oder Mandarine.

Insbesondere werden die Verbindungen der Formel I zur Verringerung oder Verhinderung von Frostschäden bei Kern- und Steinobstarten und insbesondere bei Apfel verwendet.

Acylcyclohexandionverbindungen der Formel I sind aus der EP-A 0 123 001 und aus der EP-A 126 713 bekannt.

Die Verbindungen der Formel I können sowohl in der Trionform (Triketo-Form) I.a als auch in den tautomeren Keto-Enol-Formen I.b bzw. I.c vorliegen:

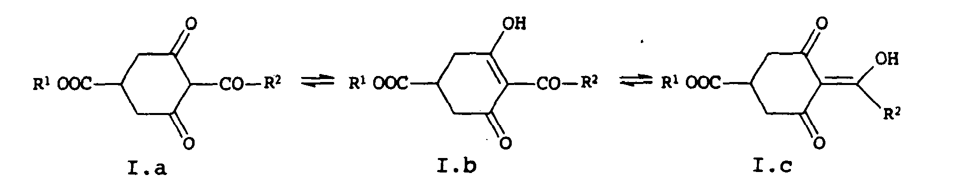

In den Verbindungen der Formel I steht R¹ vorzugsweise für H oder C₁-C₄-Alkyl.

R² steht vorzugsweise für C₁-C₄-Alkyl oder C₃-C₆-Cycloalkyl und insbesondere für Ethyl oder Cyclopropyl.

In der Definition der Reste R¹ und R² steht C₁-C₁₀-Alkyl für einen linearen oder verzweigten Alkylrest, wie Methyl, Ethyl, Propyl, Isopropyl, n-Butyl, sec-Butyl, Isobutyl, tert-Butyl, Pentyl, Neopentyl, Hexyl, Heptyl, Octyl, 2-Ethylhexyl, Nonyl oder Decyl. C₁-C₄-Alkyl steht beispielsweise für Methyl, Ethyl, Propyl, Isopropyl, n-Butyl, sec-Butyl, Isobutyl oder tert-Butyl. Vorzugsweise ist der Alkylrest linear.

In der Definition von R² steht C₃-C₁₀-Cycloalkyl beispielsweise für Cyclopropyl, Cyclopentyl, Cyclohexyl, Cycloheptyl, Cyclooctyl, Cyclodecyl oder Decalin. C₃-C₆-Cycloalkyl steht beispielsweise für Cyclopropyl, Cyclopentyl oder Cyclohexyl.

Bei den Salzen der Acylcyclohexandionverbindungen I mit R¹≠ H handelt es sich um die Salze von Monoanionen, während es sich im Falle von R¹ = H sowohl um die Salze der Mono- als auch der Dianionen dieser Verbindungen handeln kann. Die Monoanionen können sowohl als Carboxylatanionen I.d als auch als Enolatanionen I.e bzw. I.f vorliegen:

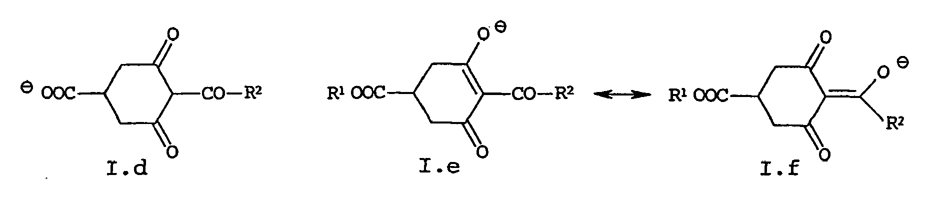

Im Dianion liegen entsprechend die Carboxylat- und die Enolat-Gruppen nebeneinander vor.

Bevorzugte Kationen in den Salzen der Verbindungen der Formel I sind die Ionen der Alkalimetalle, vorzugsweise des Lithiums, Natriums und Kaliums, der Erdalkalimetalle, vorzugsweise des Calciums und Magnesiums, und der Übergangsmetalle, vorzugsweise des Mangans, Kupfers, Zinks und Eisens, weiterhin Ammonium (NH₄⁺) und substituiertes Ammonium, worin ein bis vier Wasserstoffatome durch C₁-C₄-Alkyl, Hydroxy-C₁-C₄-alkyl, C₁-C₄-Alkoxy-C₁-C₄-alkyl, Hydroxy-C₁-C₄-alkoxy-C₁-C₄-alkyl, Phenyl oder Benzyl ersetzt sind, vorzugsweise Ammonium, Methylammonium, Isopropylammonium, Dimethylammonium, Düsopropylammonium, Trimethylammonium, Tetramethylammonium, Tetraethylammonium, Tetrabutylammonium, 2-Hydroxyethylammonium, 2-(2-Hydroxyeth-1-oxy)eth-1-ylammonium, Di(2-hydroxyeth-1-yl)ammonium, Benzyltrimethylammonium, Benzyltriethylammonium, des weiteren Phosphoniumionen, Sulfoniumionen, vorzugsweise Tri(C₁-C₄-alkyl)sulfonium wie Trimethylsulfonium und Sulfoxoniumionen, vorzugsweise Tri(C₁-C₄-alkyl)sulfoxonium. Bevorzugte Kationen sind außerdem Chlormequat [(2-Chlorethyl)trimethylammonium], Mepiquat (N,N-Dimethylpiperidinium) und N,N-Dimethylmorpholinium. Besonders bevorzugte Kationen sind die Alkalimetallkationen, die Erdalkalimetallkationen und das Ammoniumkation (NH₄⁺). Insbesondere handelt es sich um das Calciumsalz.

Besonders bevorzugt erfindungsgemäß verwendete Verbindungen sind Prohexadion (R¹ = H, R² = Ethyl), Prohexadion-Calcium (CalciumSalz von Prohexadion), Trinexapac (R¹ = H, R² = Cyclopropyl) und Trinexapac-Ethyl (R¹ = Ethyl, R² = Cyclopropyl). Speziell verwendet man Prohexadion, insbesondere Prohexadion-Calcium.

Im Rahmen der vorliegenden Erfindung bezieht sich die Bezeichnung "Verbindungen der Formel I" sowohl auf die neutralen Verbindungen I als auch auf deren Salze.

Die Verbindungen der Formel I werden vorzugsweise in einer Aufwandmenge von 25 bis 1000 g/ha, besonders bevorzugt von 50 bis 500 g/ha und insbesondere von 50 bis 250 g/ha eingesetzt.

In einer bevorzugten Ausführungsform werden die Verbindungen der Formel I in Kombination mit Vitamin E bzw. einem Derivat davon und/oder mit Abscisinsäure und/oder mit einem üblichen Frostschutzmittel als Hilfsmittel erfindungsgemäß verwendet.

Das Gewichtsverhältnis von Verbindungen der Formel I zu Vitamin E bzw. dessen Derivate beträgt vorzugsweise 1:1 bis 1:20, besonders bevorzugt 1:5 bis 1:20 und insbesondere 1:5 bis 1:15. Das Gewichtsverhältnis von Verbindungen der Formel I zur Abscisinsäure beträgt vorzugsweise 1:0,05 bis 1:1, besonders bevorzugt 1:0,05 bis 1:0,5 und insbesondere 1:0,1 bis 1:0,3. Das Gewichtsverhältnis von Verbindungen der Formel I zum Frostschutzmittel beträgt vorzugsweise 1:10 bis 1:1000, besonders bevorzugt 1:10 bis 1:500 und insbesondere 1:10 bis 1:100.

Unter Vitamin E versteht man im Rahmen der vorliegenden Erfindung alle Verbindungen der Vitamin E-Gruppe, z.B. die α- bis η-Tocopherole und die Tocotrienole sowie deren Isomere, Salze und Ester, wobei es unerheblich ist, ob diese Verbindungen natürlichen oder synthetischen Ursprungs sind. Besonders bevorzugt verwendet man das natürlich vorkommende α-Tocopherol (RRR-α-Tocopherol) oder ein Ester davon mit einer C₁-C₄-Carbonsäure, wie Ameisensäure, Essigsäure, Propionsäure oder Buttersäure. Insbesondere verwendet man das α-Tocopherol-Acetat.

Abscisinsäure ist (S)(+)-5-(1-Hydroxy-2,6,6-trimethyl-4-oxo-2-cyclohexenyl)-3-methyl-cis/trans-2,4-pentadiensäure der Formel

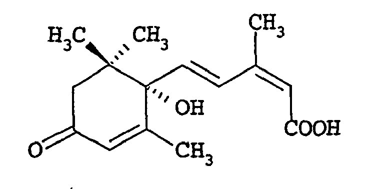

Für die Behandlung von Pflanzen geeignete Frostschutzmittel (Cryo Protectants) umfassen Alkohole, wie Propanol und Butanol, Polyole, wie Glykol oder Glycerin, (Poly)Etherpolyole, wie Diethylenglykol, Triethylenglykol und Polyethylenglykole mit einem Molekulargewicht bis zu 500. Ein bevorzugt verwendetes Frostschutzmittel ist Glycerin.

Die Verbindungen der Formel I bzw. ihre Kombination mit den oben genannten Hilfsstoffen werden typischerweise als Formulierungen eingesetzt, wie sie im Bereich des Pflanzenschutzes üblich sind.

Sie können beispielsweise in Form von konzentrierten Lösungen, Suspensionen oder Emulsionen mit Wasser verdünnt werden und durch Versprühen angewendet werden. Die Anwendungsformen richten sich nach der Pflanzensorte bzw. dem Pflanzenteil, auf den appliziert werden soll; sie sollten in jedem Fall eine möglichst feine Verteilung der Wirk- und Hilfsstoffe erlauben.

Die Formulierungen können neben den Verbindungen der Formel I gegebenenfalls als Kombination mit Vitamin E und/oder Abscisinsäure und/oder dem Frostschutzmittel für die Formulierung von Pflanzenschutzmitteln übliche Formulierungshilfsstoffe, z. B. inerte Hilfsstoffe und/oder oberflächenaktive Substanzen, wie Emulgatoren, Dispergiermittel, Netzmittel und dergleichen, enthalten.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen, Methylcellulose oder Siloxane in Betracht. Geeignete Siloxane sind beipsielsweise Polyetherpolymethylsiloxan-Copolymere, die auch als "Spreader" oder "Penetratoren" bezeichnet werden.

Als inerte Formulierungshilfsstoffe kommen im Wesentlichen in Betracht:
Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wässrige Anwendungsformen der Verbindungen I bzw. ihre Kombination mit Vitamin E und/oder Abscisinsäure und/oder dem Frostschutzmittel können aus Lagerformulierungen, wie Emulsionskonzentraten, Suspensionen, Pasten, netzbaren Pulvern oder wasserdispergierbaren Granulaten, durch Zusatz von Wasser bereitet werden. Zur Herstellung von Emulsionen, Pasten oder Öldispersionen können die Verbindungen der Formel I bzw. ihre oben genannte Kombination mit Vitamin E und/oder Abscisinsäure und/oder dem Frostschutzmittel als solche oder in einem Öl oder Lösungsmittel gelöst und mittels Netz-, Haft-, Dispergier- oder Emulgiermittel in Wasser homogenisiert werden. Es versteht sich von selbst, dass die Anwendungsformen die in den Lagerformulierungen verwendeten Hilfsstoffe enthalten.

In einer bevorzugten Ausführungsform verwendet man die Verbindungen der Formel I bzw. deren oben genannte Kombination in Form einer wässrigen Spritzbrühe. Diese enthält die Verbindungen der Formel I in einer Menge von vorzugsweise 50 bis 200 ppm. Wenn die oben genannte Kombination als Spritzbrühe verwendet wird, so enthält diese Vitamin E in einer Menge von vorzugsweise 50 bis 4000 ppm, besonders bevorzugt von 500 bis 3500 ppm und insbesondere von 1000 bis 3000 ppm; Abscisinsäure in einer Menge von vorzugsweise 0 bis 200 ppm, besonders bevorzugt von 2,5 bis 100 ppm und insbesondere von 5 bis 15 ppm und das Frostschutzmittel in einer Menge von vorzugsweise 0 bis 50000 ppm, besonders bevorzugt von 500 bis 20000 ppm und insbesondere von 500 bis 10000 ppm.

Die Komponenten Acylcyclohexandion I, Vitamin E und/oder Abscisinsäure und/oder das Frostschutzmittel können im Gemisch oder getrennt auf die Pflanze bzw. auf die Pflanzenteile appliziert werden, wobei im letzeren Fall die Applikation der einzelnen Komponenten in einem möglichst kurzen zeitlichen Abstand erfolgen sollte.

Die erfindungsgemäß verwendeten Acylcyclohexandione I sind für eine Applikation bei allen der vorstehend genannten Pflanzen, aber auch bei davon verschiedenen Pflanzenarten anwendbar. Sie können in Abhängigkeit vom Pflanzenteil, auf den appliziert werden soll, mit an sich bekannten und in der landwirtschaftlichen Praxis üblichen Geräten appliziert werden, wobei die Applikation in Form einer wässrigen Spritzlösung oder Spritzbrühe bevorzugt ist.

Die Applikation erfolgt vorzugsweise durch Spritzen bis zur Tropfnässe. Dabei wird entweder auf den gesamten oberirdischen Pflanzenteil oder aber nur auf einzelne Pflanzenteile, wie Blüten, Blätter oder Früchte, appliziert. Die Wahl der einzelnen Pflanzenteile, auf die appliziert werden soll, hängt von der Art der Pflanze und ihrem Entwicklungsstadium ab. Bevorzugt wird auf die Keimlinge, Sämlinge, Knospen und Blüten in verschiedenen Stadien der Entwicklung und jungen Früchte appliziert.

Die Applikation erfolgt vorzugsweise vor einer Kälte- oder Frostperiode. Vorzugsweise erfolgt sie wenigstens 12 Stunden, besonders bevorzugt wenigstens 24 Stunden und insbesondere 36 Stunden bis 20 Tage vor dem zu erwartenden Frosteinbruch.

Ein weiterer Gegenstand der vorliegenden Erfindung ist ein Verfahren zur Verringerung oder Verhinderung von Frostschäden bei Kern- und Steinobst sowie bei Zitruspflanzen durch Temperaturen im Bereich von -15 bis 0 °C, dadurch gekennzeichnet, dass man eine wässrige Zusammensetzung, enthaltend wenigstens eine Verbindung der Formel I oder Salze davon auf diese Pflanzen oder Pflanzenteile davon aufbringt.

Die vorstehend gemachten Ausführungen bezüglich oder Verbindungen der Formel I, weiterer Komponenten, der wässrigen Zusammensetzung sowie der Applikation gelten hier entsprechend.

Durch die erfindungsgemäße Verwendung der Acylcyclohexandione I wird die Toleranz von Pflanzen gegenüber Frost deutlich erhöht. Insbesondere werden durch die erfindungsgemäße Verwendung Frostschäden an Pflanzen verhindert oder zumindest verringert. Ein weiterer Vorteil der erfindungsgemäßen Verwendung von Acylcyclohexandionen I, speziell von Prohexadion-Calcium, ist ihre Wirkung gegen Feuerbrand. Entsprechend sind erfindungsgemäß behandelte Pflanzen nicht nur resistenter gegenüber niedrigen Temperaturen, sondern sind zusätzlich gegen diese Blüteninfektion geschützt.

Die nachfolgenden Beispiele sollen die Erfindung veranschaulichen, ohne sie jedoch einzuschränken.

### Beispiele

### 1. Verringerung/Verhinderung von Frostschäden an Apfelblüten

Zur Untersuchung der Wirkung von erfindungsgemäß verwendeten Verbindungen I wurden bei verschiedenen Apfelsorten Blütenknospen oder Blüten in unterschiedlichen Stadien zu unterschiedlichen Zeitpunkten mit Prohexadion-Calcium in Form des handelsüblichen Präparats Regalis^{®} von der BASF AG in Form eines 10%igen Granulats mit 250 ppm Wirkstoff oder mit einem Gemisch aus Vitamin E und Glycerin tropfnass besprüht (siehe Behandlungen a) bis d)) und während der Vollblüte einem natürlichen oder simulierten Frostereignis unterworfen. Anschließend wurden die behandelten Blütenzweige gemeinsam mit unbehandelten Kontrollblütenzweigen, die dem gleichem Frostereignis unterworfen worden waren, für 2 bis 4 Tage in ein Gewächshaus mit Temperaturen im Bereich von 15 bis 25 °C überführt und die Blütenschäden bewertet.

### 1.1 Simuliertes Frostereignis

### 1.1.1

Apfelzweige mit Blütenknospen oder Blüten (R. Cox) wurden wie unter a.1), b.1), c.1) oder d.1) aufgeführt behandelt und anschließend einem simulierten Frostereignis unterworfen.

### Behandlung:

a.1) Apfelknospen neun Tage vor dem simulierten Frostereignis mit Prohexadion-Calcium bis zur Tropfnässe besprüht.
b.1) Apfelblüten (Vollblüte) ein Tag vor dem simulierten Frostereignis mit Prohexadion-Calcium bis zu Tropfnässe besprüht.
c.1) Apfelblüten (Vollblüte) ein Tag vor dem simulierten Frostereignis mit einem Gemisch aus Vitamin E (2500 ppm) und Glycerin (50000 ppm) bis zur Tropfnässe besprüht.
d.1) Apfelblüten (Vollblüte) ein Tag vor dem simulierten Frostereignis mit einem Gemisch aus Vitamin E (2500 ppm), Glycerin (50000 ppm) und Break Thru (1000 ppm; Siloxan-Spreader der Fa. Goldschmidt AG, Essen) bis zur Tropfnässe besprüht.

Neun Tage (a.1)) bzw. ein Tag (b.1)-d.1)) nach der Behandlung wurden die behandelten Blütenzweige sowie unbehandelte Kontrollzweige geschnitten und einem simulierten Frostereignis unterworfen. Der Temperaturverlauf des simulierten Frostereignisses war wie folgt:
- Abkühlung von 12 °C auf 4 °C innerhalb 30 Minuten
- eine Stunde bei 4 °C
- Abkühlung von 4 °C auf 2 °C innerhalb 15 Minuten
- 75 Minuten bei 2 °C
- Abkühlung von 2 °C auf -3 °C innerhalb 30 Minuten
- 150 Minuten bei -3 °C

Zwei Tage nach dem Frostereignis wurden die Blütenschäden durch Untersuchung der einzelnen Blüten bewertet. Bei der Auswertung befanden sich die Blüten im Blütenstadium BBCH 54-56 (BBCH = Biologisches Bundesanstalt für Land- und Forstwirtschaft, Bundessortenamt und Chemische Industrie). Als geschädigt (abgetötet) gelten Blüten mit bräunlich gefärbten Fruchtknoten. Die Ergebnisse sind in nachfolgender Tabelle 1 aufgeführt. Die Werte, die den Anteil an geschädigten Blüten [%] wiedergeben, entsprechen dem Mittelwert ± der Standardabweichung. Ein statisch signifikanter Unterschied (5% Grenzdifferenz) zwischen den Mittelwerten der verschiedenen Messreihen wird durch verschiedene Buchstaben gekennzeichnet.

**Tabelle 1**

| Behandlung | Anteil geschädigter Blüten [%] | Signifikanz |
|---|---|---|
| Kontrolle (unbehandelt) | 29,6 ± 2,6 | a |
| a.1) | 15,6 ± 2,5 | b |
| b.1) | 23.1 ± 2,4 | ab |
| c.1) | 25,1 ± 3,3 | a |
| d.1) | 21.9 ± 2,5 | ab |

Wie Tabelle 1 zeigt, weisen signifikant weniger Apfelblüten, die neun Tage vor dem Frostereignis mit Prohexadion-Calbium behandelt worden waren, Blütenschäden auf als unbehandelte Blüten.

### 1.1.2

Apfelzweige mit Blütenknospen oder Blüten (R. Cox) wurden analog zu Beispiel 1.1.1 behandelt, wobei die Verweildauer bei -3 °C in der Frostkammer jedoch 210 Minuten betrug. Die Ergebnisse sind in Tabelle 2 aufgeführt.

**Tabelle 2**

| Behandlung | Anteil geschädigter Blüten [%] | Signifikanz |
|---|---|---|
| Kontrolle (unbehandelt) | 34,6 ± 2.6 | a |
| a.1) | 6,0 ± 1,2 | d |
| b.1) | 33.3 ± 2.6 | a |
| c.1) | 24,3 ± 2,1. | b |
| d.1) | 15,6 ± 2,1 | c |

Wie Tabelle 2 zeigt, weisen signifikant weniger Blüten, die neun Tage vor dem Frostereignis mit Prohexadion-Calcium behandelt worden waren, Blütenschäden auf als solche, die gar nicht oder nur zwei Tage vor dem Frostereignis behandelt worden waren.

### 1.1.3

Apfelzweige mit Blütenknospen oder Blüten (Jonagold) wurden analog zu Beispiel 1.1.1 behandelt. Die Verweilzeit in der Frostkammer bei -3 °C betrug 150 Minuten. Bei der Auswertung waren die Blüten im Blütenstadium BBCH 56 - 57. Die Ergebnisse sind in Tabelle 3 aufgeführt.

**Tabelle 3**

| Behandlung | Anteil geschädigter Blüten [%] | Signifikanz |
|---|---|---|
| Kontrolle (unbehandelt) | 71,9 ± 2,7 | a |
| a.1) | 54,4 ± 3,2 | b |
| b.1) | 69,0 ± 2,9 | a |
| c.1) | 74,7 ± 2,7 | a |
| d.1) | 56,1 ± 3,0 | b |

Wie Tabelle 3 zeigt, weisen signifikant weniger Blüten, die neun Tage vor dem Frostereignis mit Prohexadion-Calcium behandelt worden waren, Blütenschäden auf als solche, die gar nicht oder nur zwei Tage vor dem Frostereignis behandelt worden waren.

### 1.1.4

Apfelzweige mit Blütenknospen oder Blüten (Jonagold) wurden analog zu Beispiel 1.1.3 behandelt, wobei die Verweilzeit in der Frostkammer bei -3 °C 210 Minuten betrug. Die Ergebnisse sind in Tabelle 4 aufgeführt.

**Tabelle 4**

| Behandlung | Anteil geschädigter Blüten [%] | Signifikanz |
|---|---|---|
| Kontrolle (unbehandelt) | 77,4 ± 2,2 | a |
| a.1) | 43,8 ± 4,2 | c |
| b.1) | 66,0 ± 2,7 | b |
| c.1) | 49,3 ± 2,7 | c |
| d.1) | 67,2 ± 2,7 | b |

Wie Tabelle 4 zeigt, weisen insbesondere Blüten, die neun Tage vor dem Frostereignis mit Prohexadion-Calcium behandelt worden waren, aber auch diejenigen, die 2 Tage vor dem Frostereignis behandelt worden waren, signifikant weniger Schäden auf.

### 1.1.5

Apfelzweige mit Blütenknospen oder Blüten (Gala) wurden wie unter a.2), b.2), c.2) oder d.2) aufgeführt behandelt und anschließend einem simulierten Frostereignis unterworfen.

### Behandlung:

a.2) Apfelknospen elf Tage vor dem simulierten Frostereignis mit Prohexadion-Calcium bis zur Tropfnässe besprüht.
b.2) Apfelblüten (Vollblüte) zwei Tage vor dem simulierten Frostereignis mit Prohexadion-Calcium bis zur Tropfnässe besprüht.
c.2) Apfelblüten (Vollblüte) zwei Tage vor dem simulierten Frostereignis mit einem Gemisch aus Vitamin E (2500 ppm) und Glycerin (50000 ppm) bis zur Tropfnässe besprüht.
d.2) Apfelblüten (Vollblüte) zwei Tage vor dem simulierten Frostereignis mit einem Gemisch aus Vitamin E (2500 ppm), Glycerin (50000 ppm) und Break Thru (1000 ppm; Siloxan-Spreader der Fa. Goldschmidt AG, Essen) bis zur Tropfnässe besprüht.

11 Tage (a.2)) bzw. zwei Tage (b.2)-d.2)) nach der Behandlung wurden die behandelten Blütenzweige sowie unbehandelte Kontrollzweige geschnitten und einem simulierten Frostereignis unterworfen. Der Temperaturverlauf des simulierten Frostereignisses entsprach dabei demjenigen in Beispiel 1.1.1. Vier Tage nach dem Frostereignis wurden die Blütenschäden durch Untersuchung der einzelnen Blüten bewertet. Die Blüten waren bei der Auswertung im Blütenstadium BBCH 57 - 59. Die Ergebnisse sind in Tabelle 5 aufgeführt.

**Tabelle 5**

| Behandlung | Anteil geschädigter Blüten [%] | Signifikanz |
|---|---|---|
| Kontrolle (unbehandelt) | 8,0 ± 1,9 | b |
| a.2) | 5,2 ± 1,8 | b |
| b.2) | 8,8 ± 2,5 | b |
| c.2) | 3,8 ± 1,7 | b |
| d.2) | 23,9 ± 3,2 | a |

Wie Tabelle 5 zeigt, führt eine Behandlung mit Prohexadion-Calcium 11 Tage vor dem Frostereignis tendenziell zu weniger Schäden.

### 1.1.6

Apfelzweige mit Blütenknospen oder Blüten (Boskoop) wurden analog zu Beispiel 1.1.5 behandelt. Bei der Auswertung befanden sich die Blüten im Blütenstadium BBCH 59 - 61. Die Verweildauer bei -3 °C betrug 150 Minuten. Die Ergebnisse sind in Tabelle 6 dargestellt.

**Tabelle 6**

| Behandlung | Anteil geschädigter Blüten [%] | Signifikanz |
|---|---|---|
| Kontrolle (unbehandelt) | 69,4 ± 4,4 | b |
| a.2) | 33,6 ± 4,1 | c |
| b.2) | 36,8 ± 4,2 | c |
| c.2) | 61,8 ± 4,2 | b |
| d.2) | 82,5 ± 3,9 | a |

Wie Tabelle 6 zeigt, weisen signifikant weniger Blüten, die vor dem Frostereignis mit Prohexadion-Calcium behandelt worden waren, Blütenschäden auf als solche, die gar nicht oder mit Vitamin E/Glycerin behandelt worden waren.

### 1.2 Natürliches Frostereignis

### 1.2.1

Apfelzweige mit Blütenknospen oder Blüten (R. Cox) wurden wie unter a.3), b.3), c.3) oder d.3) aufgeführt behandelt und anschließend einem natürlichen Frostereignis unterworfen.

### Behandlung:

a.3) Apfelknospen zehn Tage vor dem Frostereignis mit Prohexadion-Calcium bis zur Tropfnässe besprüht.
b.3) Apfelblüten (Vollblüte) zwei Tage vor dem Frostereignis mit Prohexadion-Calcium bis zur Tropfnässe besprüht.
c.3) Apfelblüten (Vollblüte) zwei Tage vor dem Frostereignis mit einem Gemisch aus Vitamin E (2500 ppm) und Glycerin (50000) bis zur Tropfnässe besprüht.
d.3) Apfelblüten (Vollblüte) zwei Tage vor dem Frostereignis mit einem Gemisch aus Vitamin E (2500 ppm), Glycerin (50000 ppm) und Break Thru (1000 ppm; Siloxan-Spreader der Fa. Goldschmidt AG, Essen) bis zur Tropfnässe besprüht.

Die Frostdauer betrug 5 Tage. Die tiefste Temperatur wurde am zweiten Tag des Frostereignisses erreicht und betrug -4 °C. Ein Tag nach dem Frostereignis wurden die behandelten Blütenzweige sowie unbehandelte Kontrollzweige geschnitten. Ein Tag nach dem Schneiden wurden die Blütenschäden durch Untersuchung der einzelnen Blüten bewertet. Die Blüten waren bei der Auswertung im Blütenstadium BBCH 56 - 57. Die Ergebnisse sind in Tabelle 7 aufgeführt.

**Tabelle 7**

| Behandlung | Anteil geschädigter Blüten [%] | Signifikanz |
|---|---|---|
| Kontrolle (unbehandelt) | 100 ± 0 | a |
| a.3) | 88,3 ± 1,3 | b |
| b.3) | 76,6 ± 1,7 | c |
| c.3) | 89,2 ± 1,2 | b |
| d.3) | 90,8 ± 1,3 | b |

Wie Tabelle 7 zeigt, führen alle Behandlungen, insbesondere aber diejenigen mit Prohexadion-Calcium, zu geringeren Blütenschäden.

### 1.2.2

Apfelzweige mit Blütenknospen oder Blüten (Jonagold) wurden analog zu Beispiel 1.2.1 behandelt und dem gleichen Frostereignis ausgesetzt. Bei der Auswertung waren die Blüten im Blütenstadium BBCH 57 - 59. Die Ergebnisse sind in Tabelle 8 aufgeführt.

**Tabelle 8**

| Behandlung | Anteil geschädigter Blüten [%] | Signifikanz |
|---|---|---|
| Kontrolle (unbehandelt) | 74,5 ± 2,2 | a |
| a.3) | 67,5 ± 2,3 | b |
| b.3) | 67,7 ± 2,6 | b |
| c.3) | 65,1 ± 2,1 | b |
| d.3) | 64,2 ± 2,5 | b |

Wie Tabelle 8 zeigt, führen alle Behanldungen zu verringerten Blütenschäden.

### 1.2.3

Apfelzweige mit Blütenknospen oder Blüten (Boskoop) wurden wie unter a.4), b.4), c.4) oder d.4) aufgeführt behandelt und anschließend einem natürlichen Frostereignis unterworfen.

### Behandlung:

a.4) Apfelknospen dreizehn Tage vor dem Frostereignis mit Prohexadion-Calcium bis zur Tropfnässe besprüht.
b.4) Apfelblüten (Vollblüte) fünf Tage vor dem Frostereignis mit Prohexadion-Calcium bis zur Tropfnässe besprüht.
c.4) Apfelblüten (Vollblüte) fünf Tage vor dem Frostereignis mit einem Gemisch aus Vitamin E (2500 ppm) und Glycerin (50000) bis zur Tropfnässe besprüht.
d.4) Apfelblüten (Vollblüte) fünf Tage vor dem Frostereignis mit einem Gemisch aus Vitamin E (2500 ppm), Glycerin (50000 ppm) und Break Thru (1000 ppm; Siloxan-Spreader der Fa. Goldschmidt AG, Essen) bis zur Tropfnässe besprüht.

Die Frostdauer betrug einen Tag. Die tiefste Temperatur betrug -1,2 °C. Zwei Tage nach dem Frostereignis wurden die behandelten Blütenzweige sowie unbehandelte Kontrollzweige geschnitten und ein Tag nach dem Schneiden wurden die Blütenschäden durch Untersuchung der einzelnen Blüten bewertet. Bei der Auswertung befanden sich die Blüten im Blütenstadium BBCH 57 - 61. Die Ergebnisse sind in Tabelle 9 aufgeführt.

**Tabelle 9**

| Behandlung | Anteil geschädigter Blüten [%] | Signifikanz |
|---|---|---|
| Kontrolle (unbehandelt) | 94,0 ± 2,4 | ab |
| a.4) | 84,3 ± 3,3 | bc |
| b.4) | 74,7 ± 3,0 | d |
| c.4) | 95,6 ± 2,5 | a |
| d.4) | 75,5 ± 4,1 | c |

Wie Tabelle 9 zeigt, weisen signifikant weniger Blüten, die 5 Tage vor dem Frostereignis mit Prohexadion-Calcium behandelt worden waren, Blütenschäden auf als solche, die gar nicht, 13 Tage vor dem Frostereignis mit Prohexadion-Calcium oder 5 Tage vor dem Frostereignis mit Vitamin E/Glycerin behandelt worden waren.

### 2. Stabilisierung der photochemischen Effizienz des Elektronentransports bei Apfelsämlingen

In Blättern und anderen grünen Pflanzengeweben ist eine intakte Photosynthese von maßgeblicher Bedeutung für die Frostresistenz und die Intensität nachfolgender Regenerationsprozesse. Zur Untersuchung der Wirkung von erfindungsgemäß verwendeten Verbindungen I wurde die photosynthetische Leistungsfähigkeit von behandelten (a.5) bis e.5)) und unbehandelten Apfelsämlingen, die einem simulierten Frostereignis unterworfen worden waren, bestimmt.

Für die Versuche wurden Apfelsämlinge verwendet, die aus Samen von Golden-Delicious-Äpfeln nach kalter Stratifikation unter Klimakammerbedingungen gezogen wurden (Temperatur ca. 20 °C; relative Luftfeuchtigkeit ca. 70 °C; Tag:Nacht = 10,5:13,5 Stunden; Lichtintensität ca. 200 µm m⁻² s⁻¹) und zum Zeitpunkt der Behandlung drei bis vier vollausgebildete Blätter besaß. Je 10 Pflanzen pro Versuchsglied wurden wie folgt behandelt:
a.5) 21 Tage vor dem simulierten Frostereignis mit 50 ppm Prohexadion-Calcium bis zur Tropfnässe besprüht.
b.5) 8 Tage vor dem simulierten Frostereignis mit 50 ppm Prohexadion-Calcium bis zur Tropfnässe besprüht.
c.5) 2 Tage vor dem simulierten Frostereignis mit 50 ppm Prohexadion-Calcium bis zur Tropfnässe besprüht.
d.5) 2 Tage vor dem simulierten Frostereignis mit einem Gemisch aus Vitamin E (2500 ppm) und Glycerin (50000 ppm) bis zur Tropfnässe besprüht.
e.5) 2 Tage vor dem simulierten Frostereignis mit einem Gemisch aus Vitamin E (2500 ppm), Glycerin (50000 ppm) und Break Thru (1000 ppm; Siloxan-Spreader der Fa. Goldschmidt AG, Essen) bis zur Tropfnässe besprüht.

Für das simulierte Frostereignis wurden die Pflanzen folgendem Kälteprogramm unterworfen:
- Entnahme aus der Klimakammer (20 °C)
- Überführung in die Kühlzelle; randomisiertes Aufstellen in ca. 40 cm Höhe; ca. 6 Stunden bei 12 °C
- 2 Stunden bei 4 °C
- 1,5 Stunden bei 2 °C
- 1 Stunde bei 0 °C
- 3,5 Stunden bei -3 °c
- Klimakammer (20 °C)

Anschließend wurde die photosynthetische Leistungsfähigkeit der gestressten Apfelsämlinge mit Hilfe eines Pulsamplituden-Modulations-Fluorometers (PAM 2000, Firma Heinz Walz GmbH, Effeltrich) bestimmt. Der hierbei ermittelte Quotient Fv/Fₘ beschreibt, wie viel der vom Photosyntheseapparat der Pflanzen eingefangenen Lichtenergie für die Bildung von Assimilaten genutzt werden kann. Fᵥ steht dabei für die variable Fluoreszenz, die der Differenz zwischen F₀ (Grundfluoreszenz, die bei der Bestrahlung eines dunkeladaptierten Blatts mit Fluoreszenz-anregendem Licht gemessen wird) und Fₘ (maximale Fluoreszenz eines dunkeladaptierten Blattes) entspricht (Fv/Fm = (Fm-F₀)/Fₘ). In Tabelle 10 sind die 24 Stunden nach dem Frostereignis erhaltenen Ergebnisse aufgeführt.

**Tabelle 10**

| Behandlung | Fᵥ/Fₘ |
|---|---|
| Kontrolle ohne Frost | 0,801 |
| Kontrolle mit Frost | 0,755 |
| a.5) | 0,812 |
| b.5) | 0,809 |
| c.5) | 0,804 |
| d.5) | 0,765 |
| e.5) | 0,804 |

Wie Tabelle 10 zeigt, haben insbesondere die mit Prohexadion-Calcium behandelten Apfelsämlinge das Frostereignis praktisch unbeschadet überstanden, während die dem simulierten Frostereignis ausgesetzten unbehandelten Pflanzen deutlich in ihrer Photosyntheseleistung eingeschränkt sind.

Diese Ergebnisse zeigen auch, dass nicht nur Blüten, sondern auch vegetatives Gewebe von Kulturpflanzen durch Prohexadion-Calcium vor den Auswirkungen niedriger Temperaturen geschützt wird.

## Patentansprüche

1. Verwendung von Verbindungen der Formel I 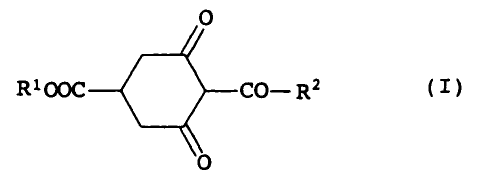 worin
R¹ für H oder C₁-C₁₀-Alkyl steht und
R² für C₁-C₁₀-Alkyl oder C₃-C₁₀-Cycloalkyl steht,
oder Salzen davon zur Verringerung oder Verhinderung von Frostschäden bei Kern- und Steinobst sowie bei Zitruspflanzen durch Temperaturen im Bereich von -15 bis 0 °C, wobei man die Verbindungen der Formel I oder Salze davon auf diese Pflanzen oder Pflanzenteile davon appliziert.

2. Verwendung nach Anspruch 1, zur Verringerung oder Verhinderung von Frostschäden an Blüten, jungen Früchten und Sämlingen.

3. Verwendung nach einem der vorhergehenden Ansprüche, wobei man die Alkalimetall-, Erdalkalimetall-, Übergangsmetall-, Ammonium-, substituierten Ammonium-, Sulfonium-, Phosphonium- oder Sulfoxoniumsalze von Verbindungen der Formel I mit R¹ = H einsetzt.

4. Verwendung nach Anspruch 3, wobei es sich um das Calciumsalz handelt.

5. Verwendung nach Anspruch 4, wobei R² für Ethyl steht.

6. Verwendung nach einem der Ansprüche 1 oder 2, wobei R¹ für Ethyl und R² für Cyclopropyl steht.

7. Verwendung nach einem der vorhergehenden Ansprüche, in Kombination mit Vitamin E und/oder Abscisinsäure und/oder üblichen Frostschutzmitteln.

8. Verwendung nach Anspruch 7, wobei es sich bei dem Frostschutzmittel um Glycerin handelt.

9. Verwendung nach einem der Ansprüche 7 oder 8, wobei die Verbindungen der Formel I und Vitamin E in einem Gewichtsverhältnis von 1:1 bis 1:20 eingesetzt werden.

10. Verwendung nach einem der Ansprüche 7 bis 9, wobei die Verbindungen der Formel I und die Abscisinsäure in einem Gewichtsverhältnis von 1:0,05 bis 1:1 eingesetzt werden.

11. Verwendung nach einem der Ansprüche 7 bis 10, wobei die Verbindungen der Formel I und die üblichen Frostschutzmittel in einem Gewichtsverhältnis von 1:10 bis 1:500 eingesetzt werden.

12. Verwendung nach einem der vorhergehenden Ansprüche, wobei man die Verbindungen der Formel I und/oder ihre Salze in Form einer wässrigen Spritzbrühe einsetzt, worin die Verbindungen der Formel I und/oder ihre Salze in einer Menge von 5 bis 1000 ppm enthalten sind.

13. Verwendung nach einem der vorhergehenden Ansprüche, wobei die Aufwandmenge der Verbindungen der Formel I im Bereich von 25 bis 1000 g/ha liegt.

14. Verfahren zur Verringerung oder Verhinderung von Frostschäden bei Kern- und Steinobst sowie bei Zitruspflanzen durch Temperaturen im Bereich von -15 bis 0 °C, **dadurch gekennzeichnet, dass** man eine wässrige Zusammensetzung, enthaltend wenigstens eine Verbindung der Formel I oder Salze davon, auf diese Pflanzen oder Pflanzenteile davon aufbringt.

## Claims

1. The use of compounds of the formula I 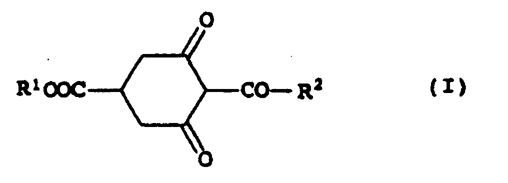 in which
R¹ is H or C₁-C₁₀-alkyl and
R² is C₁-C₁₀-alkyl or C₃-C₁₀-cycloalkyl,
or salts of these for reducing or preventing frost damage in pome and stone fruit and in citrus plants as the result of temperatures in the range of from -15 to 0°C, wherein the compounds of the formula I or salts thereof are applied to these plants or their plant parts.

2. The use according to claim 1 for reducing or preventing frost damage on flowers, young fruits and seedlings.

3. The use according to any of the preceding claims, wherein the alkali metal, alkaline earth metal, transition metal, ammonium, substituted ammonium, sulfonium, phosphonium or sulfoxonium salts of compounds of the formula I where R¹ = H are employed.

4. The use according to claim 3, wherein the calcium salt is used.

5. The use according to claim 4, where R² is ethyl.

6. The use according to claim 1 or 2, where R¹ is ethyl and R² is cyclopropyl.

7. The use according to one of the preceding claims in combination with vitamin E and/or abscisic acid and/or conventional cryoprotectants.

8. The use according to claim 7, wherein the cryoprotectant is glycerol.

9. The use according to claim 7 or 8, wherein the compounds of the formula I and vitamin E are employed in a weight ratio of from 1:1 to 1:20.

10. The use according to any of claims 7 to 9, wherein the compounds of the formula I and abscisic acid are employed in a weight ratio of from 1:0.05 to 1:1.

11. The use according to any of claims 7 to 10, wherein the compounds of the formula I and the conventional cryoprotectants are employed in a weight ratio of from 1:10 to 1:500.

12. The use according to any of the preceding claims, wherein the compounds of the formula I and/or their salts are employed in the form of an aqueous spray mixture comprising the compounds of the formula I and/or their salts in an amount of from 5 to 1000 ppm.

13. The use according to any of the preceding claims, wherein the application rate of the compounds of the formula I is in the range of from 25 to 1000 g/ha.

14. A method for reducing or preventing frost damage in pome and stone fruit and in citrus plants as the result of temperatures in the range of from -15 to 0°C, which comprises applying an aqueous composition comprising at least one compound of the formula I or salts thereof to these plants or their plant parts.

## Revendications

1. Utilisation de composés de formule I 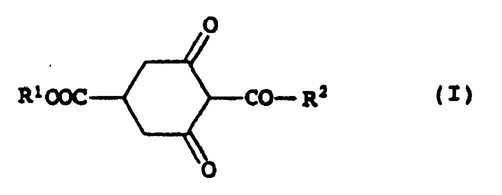 dans laquelle
R¹ représente H ou un groupe alkyle en C₁-C₁₀ et
R₂ représente un groupe alkyle en C₁-C₁₀ ou cycloalkyle en C₃-C₁₀,
ou de leurs sels, pour réduire ou empêcher les altérations dues au gel de fruits à noyaux et à pépins ainsi que d'agrumes par des températures dans la plage de -15 à 0 °C, dans laquelle on applique les composés de formule I ou leurs sels sur ces plantes ou des parties de ces plantes.

2. Utilisation selon la revendication 1, pour réduite ou empêcher les altérations dues au gel de fleurs, de fruits jeunes et de plants.

3. Utilisation selon l'une quelconque des revendications précédentes, dans laquelle on utilise les sels de métaux alcalins, de métaux alcalino-terreux, de métaux de transition, d'ammonium, d'ammonium substitué, de sulfonium, de phosphonium ou de sulfoxonium de composés de formule I où R¹ = H.

4. Utilisation selon la revendication 3, dans laquelle il s'agit du sel de calcium.

5. Utilisation selon la revendication 4, dans laquelle R² représente le groupe éthyle.

6. Utilisation selon la revendication 1 ou 2, dans laquelle R¹ représente le groupe éthyle et R² représente le groupe cyclopropyle.

7. Utilisation selon l'une quelconque des revendications précédentes, en association avec la vitamine E et/ou l'acide abscisique et/ou des agents usuels de protection contre le gel.

8. Utilisation selon la revendication 7, dans laquelle l'agent de protection contre le gel est le glycérol.

9. Utilisation selon la revendication 7 ou 8, dans laquelle les composés de formule I et la vitamine E sont utilisés en un rapport pondéral de 1:1 à 1:20.

10. Utilisation selon l'une quelconque des revendications 7 à 9, dans laquelle les composés de formule I et l'acide abscisique sont utilisés en un rapport pondéral de 1:0,05 à 1:1.

11. Utilisation selon l'une quelconque des revendications 7 à 10, dans laquelle les composés de formule I et les agents usuels de protection contre le gel sont utilisés en un rapport pondéral de 1:10 à 1:500.

12. Utilisation selon l'une quelconque des revendications précédentes, dans laquelle on utilise les composés de formule I et/ou leurs sels sous forme d'une bouillie aqueuse à pulvériser, dans laquelle les composés de formule I et/ou leurs sels sont contenus en une quantité de 5 à 1 000 ppm.

13. Utilisation selon l'une quelconque des revendications précédentes, dans laquelle la quantité utilisée des composés de formule I se situe dans la plage allant de 25 à 1 000 g/ha.

14. Procédé pour réduite ou empêcher les altérations dues au gel de fruits à pépins ou à noyaux ainsi que d'agrumes par des températures dans la plage de -15 à 0 °C, **caractérisé en ce qu'**on applique sur ces plantes ou des parties de ces plantes une composition aqueuse contenant au moins un composé de formule I ou ses sels.
